# EUROPEAN PATENT APPLICATION

(11) **EP 4 800 654 A1**
(43) Date of publication of application: **02.09.2026**
(21) Application number: 25160394.0
(22) Date of filing: 26.02.2025
(51) Int. Cl.: G06T 15/20, G06T 17/00, G06N 3/00

(54) **TECHNIQUE FOR REPRESENTING MULTI-MODALITY SENSOR DATA**

(71) Applicant: Robert Bosch GmbH, 70442 Stuttgart (DE)
(72) Inventor: Tatarchenko, Maxim, 13059 Berlin (DE); Kall, Jochen, 31137 Hildesheim (DE); Mummadi, Chaithanya Kumar, Coraopolis, PA, 15108 (US); Schreiber, Marcel, 89231 Neu-Ulm (DE); Miller, John, Pittsburgh, PA, 15217 (US); Abdulatif, Sherif, 70191 Stuttgart (DE); Vertens, Johan, 72250 Freudenstadt (DE); John, Dalina, 31199 Diekholzen (DE)

(57) **Abstract**

A method for training a machine learning, ML, model for generating a joint particle-based representation (510) of a scene from multi-modality sensor data comprises receiving sensor data (502; 5012; 522) acquired by a set of optical sensors of different sensor modality, representing the same scene. A joint particle-based representation (510) of the scene covered by the optical sensors is generated. Intersections between rays emanating from a sensor location with the joint particle-based representation (510) are determined, based on which an observation of the scene is rendered (508; 518; 528). A sensor-specific loss function value is determined by comparing the rendered (508; 518; 528) observation with an observation rendered based on the received sensor data (502; 5012; 522). The ML model is trained by determining the intersections, rendering the observation and determining the value of the sensor-specific loss function for every optical sensor, and by optimizing a combination (520) of the sensor-specific loss functions.

## Description

The present invention relates to a technique for training a machine learning (ML) model for generating a joint particle-based representation of a scene from multi-modality sensor data and to a technique for generating synthetic (e.g., training, testing and/or validating) sensor data sets, in particular comprising methods, computing devices, a computer program product, and a computer-readable storage medium.

### State of the art

In the context of autonomous driving and robotics, often different sensor modalities are used, such as multiple cameras as well as a small number of LiDAR sensors. Given some sensor measurements (camera, LiDAR, radar) from a real-world scene, a task is to reconstruct a joint representation, which allows generating multi-modal sensor data from the same scene but at novel sensor positions and orientations, and/or with modified sensor parameters.

Over the last years, variants of this task have been attempted to be solved by approaches from the NeRF [1] family. More recently, Gaussian Splatting [2] proved to be a faster and more explicit NeRF alternative. In a vanilla Gaussian Splatting pipeline, the scene is represented as a collection of 3D Gaussians with some parameters. One can produce a 2D rendering of the scene by projecting (splatting) Gaussians onto the camera's image plane given the known camera intrinsics and extrinsics. The scene representation is optimized by comparing the rendered and the ground truth images of the scene, and adapting the Gaussian parameters accordingly.

However, training a vanilla Gaussian Splatting pipeline is only possible for cameras - it does not work for other sensors like LiDAR or radar.

In another attempt, in [3] LiDAR point clouds are used for initializing Gaussians means and for depth supervision during training. However, other information provided by LiDAR sensors is disregarded.

It is therefore an object of the present invention to provide a solution for improving on precision and/or plausibility of observations of scene from sensors of multiple modalities. Alternatively or in addition, it is an object to augment synthetic (e.g., training, testing and/or validating) data for multi-modality perception tasks.

### Disclosure of the Invention

This object is solved by a method for training a machine learning (ML) model for generating a joint particle-based representation of a scene from multi-modality sensor data, a method for generating synthetic sensor data sets, by two computing devices, by a computer program (and/or computer program product), and by a computer-readable storage medium according to the appended independent claims. Advantageous aspects, features and embodiments are described in the dependent claims and in the following description together with advantages.

In the following, the solution according to the invention is described with respect to the claimed methods as well as with respect to the claimed computing devices. Features, advantages or alternative embodiments herein can be assigned to the other claimed objects (e.g., the computer program or a computer program product), and vice versa. In other words, claims for the computing devices can be improved with features described or claimed in the context of the methods. In this case, the functional features of the methods are embodied by structural units of the computing devices and vice versa, respectively.

As to a first method aspect, a (e.g., computer-implemented) method for generating a joint particle-based representation of a scene from multi-modality sensor data is provided. The method may train a machine learning (ML) model for the generating of the joint particle-based representation. The method comprises a step of receiving sensor data acquired by a set of at least two optical sensors of different sensor modality. The received sensor data represent one and the same scene. The method further comprises a step of generating a joint particle-based representation of the scene covered by the set of at least two optical sensors. The generating is based on the received sensor data. The method further comprises a step of determining, for a predetermined optical sensor within the set of at least two optical sensors, intersections between rays emanating from a location of the predetermined optical sensor with the generated joint particle-based representation. The method further comprises a step of rendering (in particular by a renderer associated with the sensor modality of the predetermined optical sensor) an observation (e.g., an image and/or measurement) of the scene. The rendering is based on the determined intersections between the rays and the joint particle-based representation. The method still further comprises a step of determining at least one value of a sensor-specific loss function. Determining the at least one value of the sensor-specific loss function comprises comparing the rendered observation of the scene with an observation comprised in (and/or encoded by) the received sensor data acquired by the predetermined (and/or corresponding) optical sensor. The the joint particle-based representation of the scene may be optimized (and/or the ML model may be trained for generating the joint particle-based representation of the scene) by repeating the steps of determining the intersections, of rendering the observation and of determining the at least one value of the sensor-specific loss function for every optical sensor within the set of at least two optical sensors, and by optimizing a combination of the determined at least one value of the sensor-specific loss function for every optical sensor.

By the technique, a ML model can be trained for generating multi-modal synthetic (e.g., training, testing, and/or validating) data for a downstream perception task in relation to a scene. The downstream perception task can enable autonomous driving of a vehicle (e.g., for a traffic scene) and/or can enable using robotics in a factory and/or home automation environment (e.g., for an indoor scene or a scene at a manufacturing site). The ML model is trained for generating a joint particle-based representation (briefly also: particle representation) of a scene using a plurality of (also: set of at least two) optical sensors of different modalities. The ML model is further trained to re-construct an observation per sensor modality from the joint particle-based representation.

Observation herein broadly refers to a (e.g., two-dimensional, 2D) camera image, a (e.g., three-dimensional, 3D) measurement of LiDAR sensor data, a (e.g., 3D) measurement of radar sensor data, and/or an observation based on any combination of sensor data acquired by means of optical sensors (also: imaging sensors and/or measurement sensors). Alternatively or in addition, the observation of the scene may comprise (e.g., re-) constructed sensor data, wherein the (e.g., re-) constructing comprises deriving the sensor data from the joint particle-based representation of the scene. Further alternatively or in addition, the observation of the scene based on the intersections of rays emanating from the location of the predetermined optical sensor may be of an identical digital data type as the portion of sensor data acquired by means of the predetermined optical sensor.

Rendering may be performed by a sensor modality-specific renderer. In particular, 3D observations (e.g., measurements of LiDAR sensor data) need not (e.g., explicitly) be projected into 2D. E.g., a camera renderer may be configured for rendering 2D images. Alternatively or in addition, a LiDAR renderer may be configured for re-producing (e.g., synthetic and/or 3D) LiDAR sensor data (in particular from the joint particle-based representation). Alternatively or in addition, rendering of LiDAR data (in particular by the LiDAR renderer) may comprise sampling rays according to a LiDAR sensor model and then computing a depth and/or intensity for every ray. Further alternatively or in addition, a radar renderer may be for re-producing (e.g., synthetic and/or 3D) radar sensor data (in particular from the joint particle-based representation).

The one and same scene (briefly: the scene) comprises a (in particular real-world) scene, for which sensor data are acquired by the optical sensors, which can be placed at different locations relative to the scene. For example, an automatically driving vehicle may comprise a plurality of sensors located at the front, rear, sides, top and/or bottom of the vehicle.

The sensor data may be acquired at the same instant in time, or at least partially over the same time period, for representing the scene.

The scene may comprise a traffic-related scene in the vicinity of an autonomously driving vehicle (also: ego vehicle). The set of optical sensors may at least partly be localized at the ego vehicle. Alternatively or in addition, the scene may comprise a factory environment in the vicinitiy of a robot, or an environment in the vicinity of a home automation robot. In each case, at least a part of the set of optical sensors may be localized at the robot.

By the training for the generating of a joint particle-based representation and the subsequent re-construction of an observation per sensor modality, novel multi-modal synthetic (e.g., training, testing, and/or validating) data for the downstream perception task can be generated for novel sensor placements (e.g., locations and/or orientations), and/or in novel configurations of the set of optical sensors (e.g., with changed numbers of optical sensors per sensor modality). Alternatively or in addition, the novel multi-modal synthetic data for the downstream perception task can comprise sensor data (also: sensor data sets) with modified sensor-specific parameters and/or modified sensor-independent (also: sensor-agnositc) parameters.

Alternatively or in addition, by the training technique, a "world model" for closed loop simulation can be generated.

In the closed-loop simulation, a system (e.g., comprising the ML model and/or the computing devices according to the device aspects) may be modeled together with control and environment feedback (and/or scene feedback). For example, in case of autonomous driving this may mean that a car (and/or agent) receives observations (and/or sensor data) from a virtual environment and predicts what to do next. The action is then executed, e.g., the car moves somewhere. The environment (and/or scene) also changes, e.g., other vehicles also move somewhere. After that, the agent receives the new observations (and/or sensor data), and the process repeats. The next state of the environment (and/or the scene) always depends on the previous actions of the agent.

Due to the multi-modality of the set of optical sensors, observations from various sensor modalities (also: sensor types) can enhance each other and produce richer particle-based representations. Alternatively or in addition, a plausibility of the joint particle-based representation, and hence also of the rendered observation, can be improved.

The rendered observation can comprise a time series (also: sequence) of observations. The time series may correspond to the time series comprised in each sensor data set (e.g., the sensor data from one optical sensor within the set).

The technique can be computationally efficient due to the particle-based representation and due to the determination (also: calculation) of intersections of rays with the particle-based representation.

The particle-based representation may comprise a plurality of (e.g., 3D) functions. Each (e.g., 3D) function may be strongly localized at (and/or around) a position (also: mean) with a predetermined range (also: covariance, variance and/or width, such as half-width). The predetermined range may be isotropic for a first type of (e.g., 3D) functions, such as Gaussians, or it may be anisotropic. E.g., 100,000 3D Gaussians supplemented with multiple parameters may jointly represent the scene observed by the set of optical sensors.

The joint particle-based representation may comprise non-sensor-specific (also: sensor-independent) parameters, such as mean and covariance, as well as sensor-specific parameters, such as (e.g., camera) extrinsic and/or extrinsic parameters, color and/or opacity for camera, and/or intensity for LiDAR.

The particle-based representation may be based on multiple copies of a particle kernel function (also: primitive), which comprises as parameters a position per particle and at least one covariance value per particle.

The particle kernel function may comprise, e.g., a Gaussian, such as a three-dimensional (3D) Gaussian, a generalized Gaussian (GG2), a kernelized surface (SGG2), or a cosine wave modulation (CSGG2).

Performing the method, using a 3D Gaussian as particle kernel function, for sensor data acquired by means of only cameras may be denoted as a generalization of Gaussian splatting. Alternatively or in addition, the technique using sensor data acquired by optical sensors of different sensor modalities may generalize Gaussian splatting by directly determining interactions of rays with the Gaussian representation.

The parameters may be optimized, e.g., for the rendering, based on two or more (e.g., sensor-specific) loss functions simultaneously, e.g., depending on a number of tensors (such as covariance matrices). The loss functions (briefly also: the losses) may be summed, e.g., L = L_im + L_lid with L_im an image-based loss and L_lid a LiDAR-based loss, and the parameter optimization may be performed for the summed loss L. In some embodiments, the (e.g., camera) intrinsic parameters and/or the extrinsic parameters of the sensors may be fixed, and/or may be assumed to be known. The intrinsic parameters and/or the extrinsic parameters may describe the 3D position (and/or orientation) and/or fixed properties of each sensor.

The sensor-independent parameters (such as mean and/or scale) and the sensor-specific parameters (such as opacity and/or color) may have learnable (and/or optimizable) values. Each particle (and/or 3D Gaussian) may have a set of sensor-independent parameters and of sensor-specific parameters assigned to it. Figuring out the right values of these parameters may be exactly the essence of the technique for training the ML model for generating the joint particle-based representation. Generating one or more rays may be agnostic of a forward and/or backward direction. Emanating from the location of the optical sensor may thus be identical to incident in the location of the optical sensor for the generating of the one or more rays. Alternatively or in addition, each ray may be characterized by a ray direction and at least one point on the ray, such as a ray origin or a ray endpoint.

Generating the one or more rays may comprise ray sampling. Sampling may be performed along three (or four) axes, and/or may take into account a direction angle and/or a length.

Each full sensor observation may comprise many rays (e.g., image pixels and/or LiDAR rays). However, not every single one of those rays needs to be used in every training iteration.

Instead, a subset of rays may be randomly selected that is used in the (e.g., current) optimization step. E.g., a random fixed-sized subset of pixels from an image may be selected.

Observations (and/or images, and/or measurements) may be taken at different time steps, introducing a time component into the sampling. In practice, e.g., an image (and/or a LiDAR scan, and/or a radar point cloud) may be selected from a certain point in time, and then rays may be sampled from it.

Each ray may correspond to a (e.g., single) point in a point cloud associated with an optical sensor.

The rendering of the observation of the scene based on the intersections between the rays and the joint particle-based representation may be based on a set of rendering parameters.

The rendering parameters may comprise the intrinsic parameters, the extrinsic parameters, the sensor-independent parameters, and/or the sensor-specific parameters. Alternatively or in addition, the rendering parameters may correspond to (e.g., may essentially be the same or the inverse of) the sensor parameters and/or the parameters of the particle-based representation.

Determining values of the rendering parameters for an intersection between a ray and the joint particle-based representation may comprise adding up the values of a rendering parameter per contributing particle (e.g., up to a maximum and/or up to a threshold value of the parameter). For example, a color and/or an opacity of a pixel for rendering a camera image may be the sum over colors and/or opacities of the contributing particles. The contributing particles may be the particles, for which the position (also: the mean) is less than the covariance value away from the pixel.

The optimization of the combination of the determined at least one value of the (e.g., sum of sensor-specific) loss function(s) may be gradient-based.

The rendering may comprise differentiable volume rendering. Thereby, the gradient-based optimization of the combination of the determined at least one value of (e.g., the specific) loss function(s) may be enabled.

The combination of the determined at least one value of the (e.g., the specific) loss function may comprise a combination, such as a weighted sum, over values of sensor-specific loss functions (also: sensor modality-specific loss functions).

The sensor-specific loss function may be independently selected for each sensor modality. By combining the sensor-specific loss functions, the generating of the joint particle-based representation can be improved for all sensor modalities.

The at least two optical sensors of different sensor modalities may comprise at least two of a camera, a LiDAR sensor, and a radar sensor. E.g., the set of sensors may comprise several cameras and multiple LiDAR sensors.

By combining different sensor modalities, the observing (also: imaging and/or measuring) of the scene can be improved. For example, during difficult visibility conditions (such as foggy weather or during the night), sensor data from LiDAR sensors and/or from radar sensors can significantly improve a knowledge about a traffic-related scene.

Alternatively or in addition, the different sensor modalities may be suitable for different ranges of distances. E.g., a camera may capture a scene of 1 meter to 200 meters from the camera. Alternatively or in addition, a LiDAR sensor may capture a scene of 10 centimeters to 500 meters, in some cases even up to 2,000 meters, from the LiDAR sensor. Further alternatively or in addition, a radar sensor may capture a scene of 10 centimeters to 6 meters, in some cases up to 150 meters, from the radar sensor. It is noted that the exemplarily given ranges are not limiting the technique in the sense that the ranges may heavily depend on the specific optical sensor, and/or on the manufacturer of the optical sensor and may, e.g., extend beyond the exemplarily given ranges.

In an example, the set of optical sensors may comprise six cameras and two LiDAR sensors, and each sensor data set per optical sensor may be acquired over a time period of five seconds, with the time period being identical for all optical sensors.

The method may comprise a step of receiving a set of sensor-specific parameters in relation to the predetermined optical sensor.

The rendering may be based on the set of sensor-specific parameters (briefly also: sensor parameters). Thereby, a faithful reproduction from the joint particle-based representation of the sensor data acquired by the predetermined optical sensor (and/or of the scene) may be enabled.

Sensor parameters for a camera may comprise extrinsic camera parameters (briefly: extrinsic parameters) and/or intrinsic camera parameters (briefly: intrinsic parameters). The extrinsic parameters may represent the location of the camera in a 3D scene. Alternatively or in addition, the intrinsic parameters may represent an optical center and/or focal length of the camera. World points may be transformed to camera coordinates using the extrinsic parameters.

Sensor calibration may refer to the process of measuring the correspondence between the output of the sensor and the data actually measured by the sensor.

Sensor parameters for a LiDAR sensor may comprise a laser wavelength, detection range, Field of View (FOV), ranging accuracy, angular resolution, point rate, number of beams, safety level, output parameters, IP rating, power, supply voltage, laser emission mode (mechanical/solid-state), and/or lifespan.

Sensor parameters for a radar sensor may comprise a frequency band and/or modulation.

The rendering of the observation may be based on a set of values of rendering parameters of the predetermined optical sensor. Optionally, at least a subset of the rendering parameters may correspond to sensor-specific parameters.

The sensor-specific parameters (and/or the extrinsic parameters and/or intrinsic parameters) may be comprised in a set of sensor-specific parameters received in relation to the predetermined optical sensor. Thereby, it is ensured that a renderer uses the most appropriate set of parameters for reproducing the sensor data (and/or the scene) faithfully based on the joint particle-based representation.

The rendering parameters may comprise an opacity and/or a color for a camera as optical sensor. Alternatively or in addition, the rendering parameters may comprise an intensity for a LiDAR sensor as optical sensor. Alternatively or in addition, the rendering parameters may comprise a radar cross section (RCS) for a radar sensor as optical sensor.

The rendering parameters may at least comprise the sensor-specific parameters. For example, a renderer may be used to render the observation of the scene for a selected sensor modality and therein a particular selected optical sensor.

In an embodiment, the scene may be represented by 3D Gaussians. Gaussian splats may be 2D projections of those 3D Gaussians that may be used for rendering according to the conventional Gaussian Splatting method. Gaussian splats (as an example of particles) may be small, soft blobs that capture identifying parameters for camera observations, comprising color, position, and/or opacity, which are blended together.

The technique (e.g., for training the ML model) for generating the joint particle-based representation of the scene from multi-modality sensor data, and/or the technique for generating synthetic sensor data sets, may use Gaussian ray tracing where (in particular instead of projecting the Gaussians onto the image plane) rays are shot into 3D and the ray-to-Gaussian intersections are found in 3D.

In an embodiment, the renderer may be a Gaussian splatting renderer. A Gaussian splatting renderer may be a renderer for creating 3D scenes from multiple 2D observations, each captured by a camera, by using Gaussian splatting. Gaussian splatting may comprise using a position of an optical sensor and/or a view angle of an optical sensor as sensor-specific parameters. Gaussian splatting may further comprise making use of a Gaussian representation.

Determining the intersections between the rays and the joint particle-based representation may comprise generating one or more rays emanating from a location of the optical sensor for the predetermined optical sensor. Alternatively or in addition, determining the intersections between the rays and the joint particle-based representation may comprise determining an intersection with the generated joint particle-based representation for each generated ray. Further alternatively or in addition, determining the intersections between the rays and the joint particle-based representation may comprise determining a set of values of rendering parameters for each determined intersection. The determining may be based on the generated joint particle-based representation at the intersection. The set of values of rendering parameters may depend on the location of the predetermined optical sensor and/or the sensor modality of the predetermined optical sensor.

In order to enable the rendering, the values of the rendering parameters may be determined per pixel (e.g., for a 2D camera image) and/or per voxel (e.g., for a 3D LiDAR measurement or a 3D radar measurement). The values of the rendering parameters may be determined as contributions from particles (and/or Gaussians) intersecting a ray (such as along a line of sight) from the predetermined optical sensor. The combination of the at least one value of the sensor-specific loss functions for training the ML model may comprise a (e.g., weighted) sum of the values. By combining (e.g., summing) values of the sensor-specific loss functions, the generating of the joint particle-related representation can be synergistically optimized for each sensor modality comprised in the set of optical sensors.

The sensor-specific loss function may comprise contributions from independently selected sensor modality-specific loss functions.

The sensor-specific loss function may comprise an L1 loss function, an L2 loss function, a structural similarity index measure (SSIM), and/or a mean squared error (MSE). E.g., camera-specific loss function may be the L1 loss, L2 loss, SSIM, or MSE. Alternatively or in addition, for LiDAR sensors, the L1 loss or L2 loss may be selected. Further alternatively or in addition, for radar sensors, the L1 loss may be selected.

In some embodiments, generating the joint particle-based representation may comprise determining, for portion of the received sensor data acquired by one sensor modality, a particle-based representation of the scene, and fusing the determined particle-based representations per sensor modality into the joint particle-based representation for all sensor modalities comprised in the set of optical sensors.

The joint particle-based representation may comprise a position of a particle and at least one covariance value. The position of the particle (also: mean) may parameterize the location within the scene, to which the particle contributes its maximum.

Alternatively or in addition, the at least one covariance value may comprise a covariance matrix, with independent values per spatial direction. Thereby, a particle of anisotropic shape can be parameterized.

The mean and the at least one covariance value may also be denoted as sensor-independent parameters.

The joint particle-based representation may comprise a three-dimensional (3D) Gaussian representation of the scene.

The 3D Gaussian representation may be a particularly simple, and thus computationally efficient, representation of the scene. For example, the 3D Gaussian representation may make use of Gaussians, which each represent an isotropic particle. The sensor data may comprise a time series per sensor data set. The time series of each sensor data set may be at least partially captured over an identical time span for each optical sensor within the set of optical sensors.

The different optical sensors may start and finish acquiring observations at slightly different times. The joint particle-based representation may be generated only for the time span, in which all optical sensors have acquired sensor data sets. Thereby, a time-evolution of the scene can be represented by a time-dependent particle-based representation.

In some embodiments, such as when three different sensor modalities are used, for some time spans, the joint particle-based representation may only be constructed for a subset (such as two) of the different sensor modalities. This applies in particular to cases, where one sensor modality does not acquire sensor data sets during the full acquisition time of the other sensor modalities.

The method may be performed using one or more graphics processing units (GPUs) for efficient and fast processing of the sensor data sets from optical sensors.

As to a second method aspect, a (e.g., computer-implemented) method for generating synthetic sensor data sets is provided. The method comprises a step of receiving an indication of a (e.g., virtual) set of optical sensors. Each (e.g., virtual) optical sensor within the set is associated with a sensor modality. The set comprises at least two optical sensors of different sensor modalities. The method further comprises a step of generating a (e.g., virtual) joint particle-based representation for all sensor modalities comprised in the set of optical sensors. The generating is based on the received indication of the set of optical sensors. The joint particle-based representation represents one and the same scene. The method further comprises a step of determining intersections between rays emanating from the location of an optical sensor with the generated joint particle-based representation for each optical sensor within the set of optical sensors. The method further comprises a step of generating a synthetic sensor data set of the scene in relation to each optical sensor within the set. The generating is based on the determined intersections between rays and the joint particle-based representation.

The generating of the synthetic sensor data sets may be performed by the ML model trained according to the method of the first method aspect.

The synthetic sensor data sets may be generated for training a downstream perception task that is configured to take as input sensor data sets of optical sensors as used in the training (e.g., in terms of sensor modality and sensor parameters).

The received indication of the at least one sensor parameter may comprise a sensor positioning. The sensor positioning may comprise a location and/or an orientation of the optical sensor. By the sensor positing, for example a positioning of the ego vehicle (or the robot) within the scene may be determined.

Any indication may be received by means of a user interface (UI), such as a graphical user interface (GUI).

The technique can enable augmenting training (and/or testing, and/or validating) data sets with rare occurrences. Alternatively or in addition, the technique can enable constructing dynamic scenes. For example, traffic participants can be repositioned (e.g., relative to a real-world sensor data set). In some embodiments, the ego vehicle can be repositioned. In other embodiments, which are combinable with the first kind of embodiments, other traffic participants (e.g., another vehicle) can be repositioned. The dynamic scene construction can comprise object-centric modelling.

The technique may use interpolation, such as between different sensor positions, between different object positions (and/or object orientations), between different values of rendering parameters, and/or between different sensor parameters. Alternatively or in addition, the technique need not be configured for performing extrapolations towards untrained regions of parameter spaces, positions and/or orientations.

The method may comprise receiving an indication of at least one sensor parameter (e.g., an extrinsic and/or intrinsic parameter, and/or a sensor-specific parameter) for each optical sensor comprised within the received indication. Alternatively or in addition, the method may comprise receiving an indication of an object location and/or of at least one property of the scene.

For generating the joint particle-based representation, a user input may be received, which specifies the scene, e.g., in terms of changes relative to a predefined scene. For example, the at least one property of the scene may comprise a road layout or a floor plan of a factory environment, or of a home automation environment. The at least one property of the scene may alternatively or in addition relate to lighting and/or weather conditions.

The indication of an object location may comprise a dynamic object location, and/or a location of an object at an instant in time.

The indication of the object location may (at least implicitly) comprise an object orientation. E.g., a vehicle may be oriented on a lane of a road in direction of the regular traffic flow, unless explicitly indicated otherwise.

The Gaussian representation may be in some embodiments be initialized from a LiDAR point cloud.

Determining the intersections between rays and the joint particle-based representation may comprise a step of generating one or more rays emanating from the location of an optical sensor for each optical sensor within the set of optical sensors. Determining the intersections between rays and the joint particle-based representation may alternatively or in addition comprise a step of determining an intersection with the generated joint particle-based representation for each generated ray. Determining the intersections between rays and the joint particle-based representation may alternatively or in addition comprise a step of determining at least one value of a rendering parameter per optical sensor for each determined intersection of a ray with the generated joint particle-based representation. The at least one value of the rendering parameter may be determined based on the received indication of the set of optical sensors and, optionally, on the received indication of the at least one sensor parameter of the optical sensor.

The technique focuses on generating synthetic (e.g., training data, testing, and/or validating) sets from multi-sensor modality arrangements. In some special cases, synthetic training data sets for only one sensor modality, such as only LiDAR sensors or only radar sensors, may be generated using the trained ML model.

The synthetic (e.g., training, testing, and/or validating) data sets, which are generated by the method according to the second method aspect, may be used for training a downstream perception task model for performing a perception task based on a set of optical sensors of at least two different sensor modalities. Optionally, the perception task may comprise an object detection and/or a classification. Alternatively or in addition, the perception task may comprise an occupancy estimation, a scene segmentation, an object tracking, an object velocity estimation, a depth estimation and/or distance estimation. Further alternatively or in addition, the perception task may comprise a temporal prediction.

As to a first device aspect, a computing device for training a ML model for generating a joint particle-based representation of a scene from multi-modality sensor data is provided. The computing device comprises a sensor data reception interface, which is configured for receiving sensor data acquired by a set of at least two optical sensors of different sensor modality. The received sensor data represent one and the same scene. The computing device further comprises a representation generating unit, which is configured for generating a joint particle-based representation of the scene covered by the set of at least two optical sensors. The generating of the joint particle-based representation is based on the received sensor data. The computing device further comprises a determining unit, which is configured for determining, intersections between rays emanating from a location of a predetermined optical sensor (in particular within the set of at least two optical sensors) with the generated joint particle-based representation. The computing device further comprises at least one renderer (in particular a renderer per optical sensor modality, which may also be denoted as sensor modality-specific renderer, and/or a rendering interface), which is configured for enabling rendering of an observation of the scene (in particular per optical sensor modality). The rendering is based on the determined intersections between the rays and the joint particle-based representation. The computing device still further comprises a loss function (also: optimizer), which is configured for determining at least one value of a sensor-specific loss function. Determining the at least one value of the sensor-specific loss function comprises comparing the rendered observation of the scene with an observation comprised in (and/or encoded by) the received sensor data acquired by the predetermined (and/or corresponding) optical sensor. The the joint particle-based representation of the scene may be optimized (and/or the ML model may be trained for generating the joint particle-based representation of the scene) by repeating the steps of determining the intersections, of rendering the observation and of determining the at least one value of the sensor-specific loss function for every optical sensor within the set of at least two optical sensors, and by optimizing a combination of the determined at least one value of the sensor-specific loss function for every optical sensor.

Optionally, the computing device according to the first device aspect may further comprise a parameter reception interface, a ray generating sub-unit, an intersection determining sub-unit, and/or a value determining sub-unit.

The computing device of the first device aspect may be configured to perform any one of the steps, or comprise any one of the features, described in the context of the first method aspect.

As to a second device aspect, a computing device for generating synthetic sensor data sets is provided. The computing device comprises a sensor indication reception interface, which is configured for receiving an indication of a set of optical sensors. Each optical sensor within the set is associated with a sensor modality. The set comprises at least two optical sensors of different sensor modalities. The computing device further comprises a representation generating unit, which is configured for generating a joint particle-based representation for all sensor modalities comprised in the set of optical sensors. Generating the joint particle-based representation is based on the received indication of the set of optical sensors. The joint particle-based representation represents one and the same scene. The computing device further comprises a determining unit, which is configured for determining intersections between rays emanating from the location of the optical sensor with the generated joint particle-based representation for each optical sensor within the set of optical sensors. The computing device still further comprises a data set generating unit, which is configured for generating a synthetic sensor data set of the scene in relation to each optical sensor within the set. Generating the synthetic data set is based on the determined intersections between rays and the joint particle-based representation. Optionally, the computing device according to the second device aspect may further comprise a parameter reception interface, a scene property reception interface, a ray generating sub-unit, an intersection determining sub-unit, and/or a value determining sub-unit.

The computing device of the second device aspect may be configured to perform any one of the steps, or comprise any one of the features, described in the context of the second method aspect.

As to a further aspect, a computer program product is provided comprising program elements which induce a computing device to carry out the steps of the method (e.g., for training an ML model) for generating a joint particle-based representation of a scene from multi-modality sensor data according to the first method aspect, and/or of the method for generating synthetic sensor data sets according to the second method aspect, when the program elements are loaded into a memory of the computing device. As to a still further aspect, a computer-readable medium is provided on which program elements are stored that can be read and executed by a computing device, in order to perform steps of the method (e.g., for training an ML model) for generating a joint particle-based representation of a scene from multi-modality sensor data according to the first method aspect, and/or of the method for generating synthetic sensor data sets according to the second method aspect, when the program elements are executed by the computing device.

### Brief Description of the Drawings

- Fig. 1: is an exemplary flow chart of a method for generating a joint particle-based representation of a scene from multi-modality sensor data.
- Fig. 2: is an exemplary flow chart of a method for generating synthetic sensor data sets.
- Fig. 3: schematically illustrates an exemplary architecture of a first computing device for generating a joint particle-based representation of a scene from multi-modality sensor data. The first computing device may be configured to perform the method of Fig. 1.
- Fig. 4: schematically illustrates an exemplary architecture of a second computing device for generating synthetic sensor data sets. The second computing device may be configured to perform the method of Fig. 2.
- Fig. 5: schematically illustrates an embodiment of generating a Gaussian representation based on LiDAR, camera and radar sensor data, which may performed according to the method of Fig. 1.
- Fig. 6: schematically illustrates a traffic scene with two different positions of an ego vehicle, a first of which may correspond to real sensor data, and a second of which may be synthetically generated based on a modified joint particle-based representation, wherein the sensor positioning may be modified according to the method of Fig. 2.
- Figs. 7A, 7B: and 7C show three camera images obtained by moving the sensor positioning relative to a traffic scene, such as in Fig. 6.
- Figs. 8A and 8B: show a variant of the scene of Fig. 7A with the hood of the ego vehicle comprised in the camera image and an exemplary screen capture of a 3D visualization, where every point corresponds to a single LiDAR ray, respectively.

Fig. 9A and 9B show a traffic scene with different positions of an object relative to a statically positioned set of optical sensors.

Any reference signs in the claims should not be construed as limiting the scope.

### Detailed Description

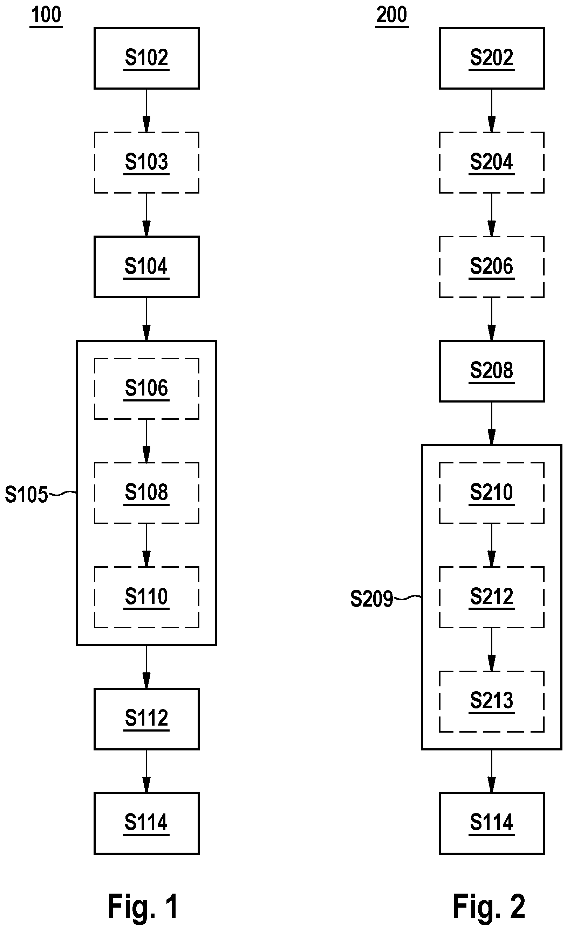

Fig. 1 shows an exemplary flow chart of a (e.g., computer-implemented) method 100 for generating a joint particle-based representation of a scene from multi-modality sensor data. The method 100 may train a machine learning (ML) model for the generating of the joint particle-based representation.

The method 100 comprises a step S102 of receiving sensor data acquired by a set of at least two optical sensors of different sensor modality. The received S102 sensor data, which are acquired by the at lest two different optical sensors, represent one and the same scene. The method 100 further comprises a step S104 of generating a joint particle-based representation of the scene covered by the set of at least two optical sensors. Generating S104 the joint particle-based representation is based on the received S102 sensor data. The method 100 further comprises a step S105 of determining intersections between rays emanating from a location of a predetermined optical sensor (in particular within the set of at least two optical sensors) with the generated S104 joint particle-based representation. The method 100 further comprises a step S112 of rendering an observation of the scene based on the determined S105 intersections between the rays and the joint particle-based representation. The rendering S112 may be performed using a sensor modality-specific renderer associated with the predetermined optical sensor (e.g., a LiDAR renderer for a LiDAR sensor as the predetermined optical sensor). The method 100 further comprises a step S114 of determining at least one value of a sensor-specific loss function. Determining S114 the at least one value of the sensor-specific loss function comprises comparing the rendered S112 observation of the scene with an observation comprised in, and/or encoded by, (e.g., a portion of) the received S102 sensor data acquired by the predetermined optical sensor. The ML model may be trained for generating S104 the joint particle-based representation of the scene (and/or the joint particle-based representation of the scene may be optimized) by repeating the steps of determining S105 the intersections, of rendering S112 the observation and of determining S114 the at least one value of the sensor-specific loss function for every optical sensor within the set of at least two optical sensors. A combination of the determined S114 at least one value of the sensor-specific loss function for every optical sensor is optimized.

The method 100 may further comprise a step S103 of receiving a set of sensor-specific parameters in relation to the predetermined optical sensor.

Determining S105 the intersections between the rays and the joint particle-based representation may comprise a substep S106 of generating one or more rays emanating from a location of the predetermined optical sensor. Determining S105 the intersections between the rays and the joint particle-based representation may further comprise a substep S108 of determining, an intersection with the generated S104 joint particle-based representation for each generated S106 ray. Determining S105 the intersections between the rays and the joint particle-based representation may further comprise a substep S110 of determining a set of values of rendering parameters for each determined S108 intersection. The set of values of rendering parameters may be determined S110 based on the generated S104 joint particle-based representation at the intersection. Optionally, the set of values of rendering parameters may depend on the location of the predetermined optical sensor and/or the sensor modality of the predetermined optical sensor.

Fig. 2 shows an exemplary flow chart of a (e.g., computer-implemented) method 200 for generating synthetic sensor data sets. The method 200 comprises a step S202 of receiving an indication of a set of optical sensors. Each optical sensor within the set is associated with a sensor modality. The set comprises at least two optical sensors of different sensor modalities. The method 200 further comprises a step S208 of generating a joint particle-based representation for all sensor modalities comprised in the set of optical sensors. Generating S208 the joint particle-based representation may be based on the received S202 indication of the set of optical sensors. The joint particle-based representation represents one and the same scene. The method 200 further comprises a step S209 of determining intersections between rays emanating from the location of the optical sensor with the generated S208 joint particle-based representation for each optical sensor within the set of optical sensors. The method 200 still further comprises a step S214 of generating a training sensor data set of the scene in relation to each optical sensor within the set. Generating S214 the training sensor data set is based on the determined S209 intersections between rays and the joint particle-based representation.

The method 200 may further comprise a step S204 of receiving an indication of at least one sensor parameter for each optical sensor comprised within the received S202 indication. Alternatively or in addition, the method 200 may further comprise a step S206 of receiving an indication of an object location and/or of at least one property of the scene.

Determining S209 the intersections between rays and the joint particle-based representation may comprise a substep S210 of generating one or more rays emanating from the location of the optical sensor for each optical sensor within the set of optical sensors. Determining S209 the intersections between rays and the joint particle-based representation may further comprise a substep S212 of determining an intersection with the generated S208 joint particle-based representation for each generated S210 ray. Determining S209 the intersections between rays and the joint particle-based representation may further comprise a substep S213 of determining at least one value of a rendering parameter per optical sensor for each determined S212 intersection of a ray with the generated S208 joint particle-based representation. The at least one value of the rendering parameter may be determined based on the received S202 indication of the set of optical sensors and, optionally, on the received S204 indication of the at least one sensor parameter of the optical sensor.

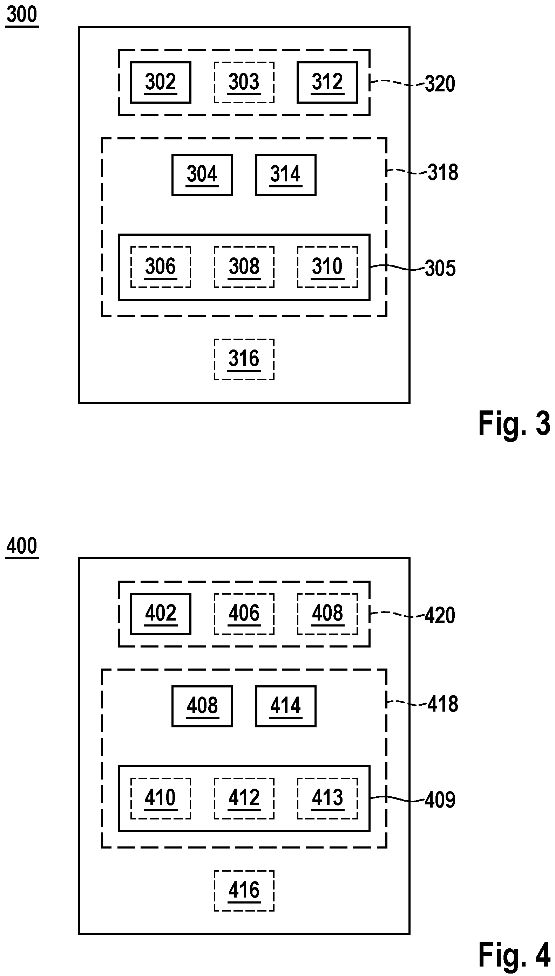

Fig. 3 schematically illustrates an architecture of a computing device 300 (e.g., for training an ML model) for generating a joint particle-based representation of a scene from multi-modality sensor data. The computing device 300 comprises a sensor data reception interface 302, which is configured for receiving sensor data acquired by a set of at least two optical sensors of different sensor modality. The sensor data acquired by the set of at least two optical sensors of different sensor modality represent one and the same scene. The computing device 300 further comprises a representation generating unit 304, which is configured for generating a joint particle-based representation of the scene covered by the set of at least two optical sensors based on the received sensor data. The computing device 300 further comprises a determining unit 305, which is configured for determining intersections between rays emanating from a location of a predetermined optical sensor (in particular within the set of at least two optical sensors) with the generated joint particle-based representation. The computing device 300 further comprises a rendering interface (and/or a set of renderers, comprising at least one renderer per optical sensor modality, also denoted as sensor modality-specific renderer) 312, which is configured for enabling (and/or providing for) rendering of an observation of the scene based on the determined intersections between the rays and the joint particle-based representation. The computing device 300 still further comprises a loss function 314, which is configured for determining at least one value of a sensor-specific loss function. Determining the at least one value of the sensor-specific loss function comprises comparing the rendered observation of the scene with an observation comprised in, and/or encoded by, (e.g., a portion of) the received sensor data acquired by the predetermined optical sensor. The ML model may be trained for generating the joint particle-based representation of the scene (and/or the joint particle-based representation of the scene may be optimized) by repeating the steps of determining the intersections, of rendering the observation and of determining the at least one value of the sensor-specific loss function for every optical sensor within the set of at least two optical sensors, and by optimizing a combination of the determined at least one value of the sensor-specific loss function for every optical sensor.

Optionally, the computing device 300 may further comprise a parameter reception interface 303, which is configured for receiving a set of sensor-specific parameters in relation to the predetermined optical sensor.

The determining unit 305 may comprise a ray generating sub-unit 306, which is configured for generating one or more rays emanating from a location of the predetermined optical sensor.

The determining unit 305 may further comprise an intersection determining sub-unit 308, which is configured for determining an intersection of each generated ray with the generated S104 joint particle-based representation. The determining unit 305 may further comprise a value determining sub-unit 310, which is configured for determining a set of values of rendering parameters based on the generated joint particle-based representation at the intersection (in particular for each determined intersection). Optionally, the set of values of rendering parameters may depend on the location of the predetermined optical sensor and/or the sensor modality of the predetermined optical sensor.

The computing device 300 may be configured to perform the method 100.

Fig. 4 schematically illustrates an architecture of a computing device 400 for generating synthetic sensor data sets. The computing device 400 comprises a sensor indication reception interface 402, which is configured for receiving an indication of a set of optical sensors. Each optical sensor within the set is associated with a sensor modality. The set comprises at least two optical sensors of different sensor modalities. The computing device 400 further comprises a representation generating unit 408, which is configured for generating a joint particle-based representation for all sensor modalities comprised in the set of optical sensors. Generating the joint particle-based representation is based on the received indication of the set of optical sensors. The joint particle-based representation represents one and the same scene. The computing device 400 further comprises a determining unit 409, which is configured for determining intersections between rays emanating from a location of an optical sensor with the generated joint particle-based representation for each optical sensor within the set of optical sensors. The computing device 400 further comprises a data set generating unit 414, which is configured for generating a synthetic sensor data set of the scene in relation to each optical sensor within the set. The synthetic sensor data set is generated based on the determined intersections between rays and the joint particle-based representation.

Optionally, the computing device 400 may comprise a parameter reception interface 404, which is configured for receiving an indication of at least one sensor parameter for each optical sensor comprised within the received S202 indication.

Alternatively or in addition, the computing device 400 may comprise a scene property reception interface 406, which is configured for receiving an indication of an object location and/or of at least one property of the scene.

The determining unit 409 may comprise a ray generating sub-unit 410, which is configured for generating one or more rays emanating from the location of the optical sensor for each optical sensor within the set of optical sensors. The determining unit 409 may further comprise an intersection determining sub-unit 412, which is configured for determining an intersection of each generated ray with the generated joint particle-based representation. The determining unit 409 may further comprise a value determining sub-unit 413, which is configured for determining at least one value of a rendering parameter per optical sensor for each determined intersection of a ray with the generated joint particle-based representation. The at least one value of the rendering parameter may be determined based on the received indication of the set of optical sensors and, optionally, on the received indication of the at least one sensor parameter of the optical sensor.

The computing device 400 may be configured to perform the method 200.

The technique (e.g., comprising the method 100, the method 200, the computing device 300, and/or the computing device 400) may alternatively be denoted as multi-modal Gaussian splatting for synthetic sensor measurements.

The technique (e.g., comprising the method 100, the method 200, the computing device 300, and/or the computing device 400) generalizes a conventional Gaussian Splatting pipeline and optimizes a joint particle- based representation of a scene (also: joint scene model and/or scene representation) given the data from different multi-modal sensors (e.g., camera, LiDAR, and/or radar). Observations (and/or images, and/or measurements) from these modalities can enhance each other to produce a richer representation.

In spirit of the vanilla Gaussian Splatting model, the optimized (in particular joint particle-based) representation can be used to render novel multi-modal observations from the same scene but, e.g., at different sensor poses.

The technique (e.g., comprising the method 100, the method 200, the computing device 300, and/or the computing device 400) allows generalizing and optimizing a multi-modal Gaussian Splatting scene representation. Such a representation can be used in the various application scenarios. In a first application scenario, additional multi-modal synthetic (e.g., training, testing, and/or validating) data sets (briefly also: training data) for (in particular downstream) perception tasks (and/or perception models) can be produced by rendering the scene from novel positions and/or novel orientations, and/or in novel configuration (e.g., changing a number of optical sensors of at least one modality). The positions and/or orientations may refer to the optical sensors, to an ego vehicle or robot, and/or to further objects in the scene. Alternatively or in addition, in a second application scenario, the learned joint particle-based representation can serve as a world model for closed-loop simulation.

The technique (e.g., comprising the method 100, the method 200, the computing device 300, and/or the computing device 400) can comprise a digital twin creation, and/or it can be used for analyzing data obtained from sensors. The sensors may determine observations (and/or measurements) of the environment (also: scene) in the form of sensor signals (also: sensor datasets and/or sensor data), which may be given by, e.g., digital images, e.g. video, radar, and/or LiDAR.

The technique may make use of virtual sensors. Alternatively or in addition, based on the sensor signals, an information about elements (e.g., a scene and/or environment around an ego vehicle) encoded by the sensor signal may be obtained (e.g., an indirect measurement may be performed based on the sensor signal used as direct measurement).

The technique (e.g., comprising the method 100, the method 200, the computing device 300, and/or the computing device 400) may relate to an upstream part in an ML tool chain. It need not directly improve an ML system that can be used for the downstream applications, but can be a technique to generate training data for this training, and/or may be a technique to generate test data to check whether the trained ML system can be safely operated, and/or may be a generative model to generate the training or test data.

In a conventional Gaussian Splatting [2] pipeline, the scene is represented as a collection of 3D Gaussians. The 2D camera images of this scene are used as observations to optimize the scene representation. Each Gaussian has the following parameters describing it: mean, covariance, opacity, color. During optimization, the parameters of the Gaussians are conventionally directly optimized towards the state, at which rendering the scene representation at the training sensor positions, and/or training sensor orientations, produces images as similar as possible to the training ones. The rendering is conventionally implemented via a computationally efficient splatting operation (hence the name). For the mathematical details of both the optimization and the rendering we refer to the original Gaussian Splatting paper [2]. The technique (e.g., comprising the method 100, the method 200, the computing device 300, and/or the computing device 400) is a generalization of the conventional Gaussian Splatting pipeline to the case of multiple sensor modalities. The technique requires changing the rendering mechanics. The splatting step, which usually projects Gaussians onto the image plane, is replaced by a direct calculation of ray-Gaussian intersections. This is necessary because the splatting only works if there is an flat 2D imaging plane, which is not the case for sensors like LiDAR or radar.

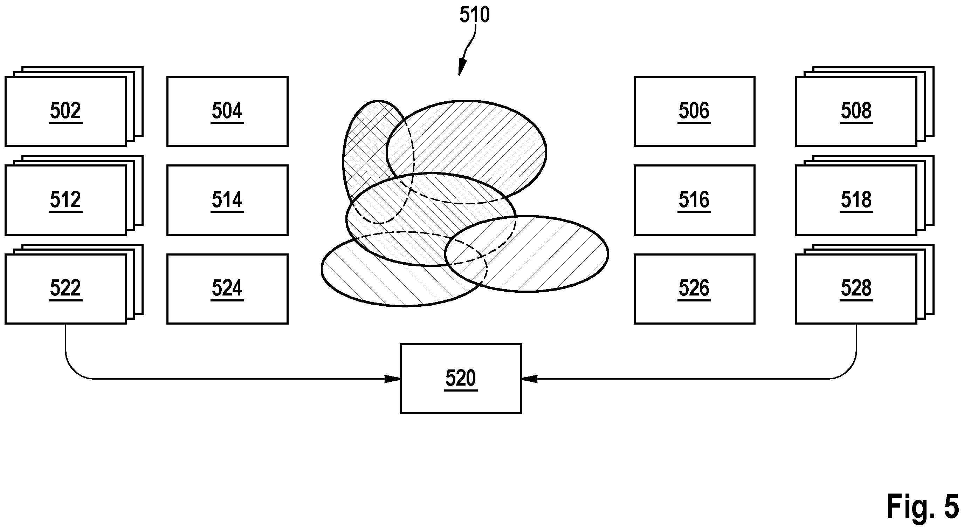

Fig. 5 gives an exemplary embodiment of a multi-modal Gaussian Splatting pipeline overview.

Given multi-modal observations (e.g., LiDAR measurements 502, camera measurements 512, and radar measurements 522) of a scene, the aim is to optimize a joint Gaussian representation 510 that allows for generating new multi-modal observations from the same scene, but, e.g., at different sensor positions and/or sensor orientations. The scene is represented as a collection of 3D Gaussians with some parameters, as schematically indicated at reference sign 510. The list of parameters may include sensor-independent means and covariance matrices of the Gaussians, together with some sensor-specific parameters, such as color and opacity for the camera, intensity for LiDAR, and/or RCS for radar. A goal is to optimize the parameters such that the set of Gaussians faithfully represents the recorded scene. The optimization uses all available observations 502; 512; 522 from different sensor modalities for the sensor-independent parameters, and only the observations from the corresponding modality for sensor-specific parameters.

The training process in Fig. 5 starts with a set of sensor measurements 502; 512; 522. For each such measurement 502; 512; 522, given the set of extrinsic and intrinsic sensor parameters, a sensor- specific ray sampler (e.g., the LiDAR ray sampler 504, camera ray sampler 514, and radar ray sampler 524) is employed to produce a set of 3D rays. As running example, a LiDAR sensor is used to demonstrate the principle. The same principle ap-plies for any number of modalities. E.g., sample each ray within a collection of LiDAR rays may correspond to a single point in a LiDAR point cloud. The ray-Gaussian interactions may be determined (e.g., computed), thus determining for every ray, which Gaussians have an influence on it. While mathematically this is a simple operation, computationally it may be extremely costly. The scene representation 510 may contain hundreds of thousands of Gaussians, and a response strength of every ray-Gaussian interaction may need to be determined (e.g., calculation). Therefore, a non-trivial approximation may be required for such a computation. An example of such an approximation is Gaussian Ray Tracing [3].

In [3], LiDAR sensor outputs are not rendered, contrarily to the technique comprising the method 100, the method 200, the computing device 300, and/or the computing device 400. Moreover, in [3] LiDAR intensities are not estimated, also , contrarily to the technique comprising the method 100, the method 200, the computing device 300, and/or the computing device 400, where the LiDAR intensity is one of the sensor-specific particle-based (e.g., Gaussian) parameters.

For the LiDAR renderings 508, camera renderings 518, and/or radar renderings 528, the properties of selected Gaussians are aggregated along each ray using the sensor-specific LiDAR renderer 506, camera renderer 516, and radar renderer 526, respectively. In this way, a single measurement value is produced per ray. E.g., in case of LiDAR, each ray is traversed starting at the sensor, and the intensity value from the Gaussians that influence this ray is accumulated. The process terminates once the maximum possible intensity is reached. Note that not all properties of the Gaussians need to be relevant for every sensor. For example, camera-specific colors will have no influence on calculating the LiDAR intensity value.

The rendered per-ray measurements are then compared to the actual recordings, yielding a loss value 520 that guides the parameter optimization. In case of LiDAR, the L1 loss between the rendered and the observed intensity for every ray may be used.

In order to use the optimized scene representation 510 for generating new sensor measurements, a sensor modality may be picked and a desired sensor location may, e.g., be manually set. After that, the sensor observations may be produced with the rendering procedure described before.

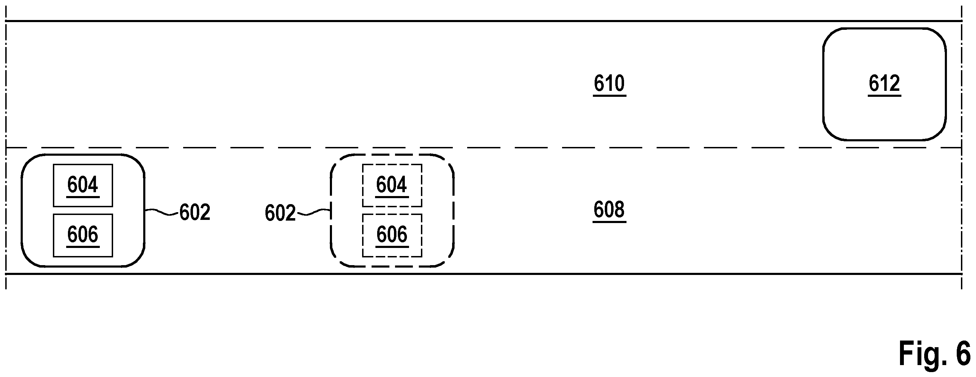

Fig. 6 schematically illustrates a traffic scene comprising an ego vehicle 602 with a set of sensors 604 and an processor, in particular a GPU 606. Two different positions of the ego vehicle 602 are shown on a first lane 608. The road comprises a second lane (or side parking area) 610 with an object 612.

At a first position the ego vehicle 602 is shown in solid lines, and at a second position in dotted lines. The first position may, e.g., be comprised in a real sensor dataset. The second position may be obtained by changing a positioning and/or orientation of the set of optical sensors located at the ego vehicle, such as by a manual input via a GUI.

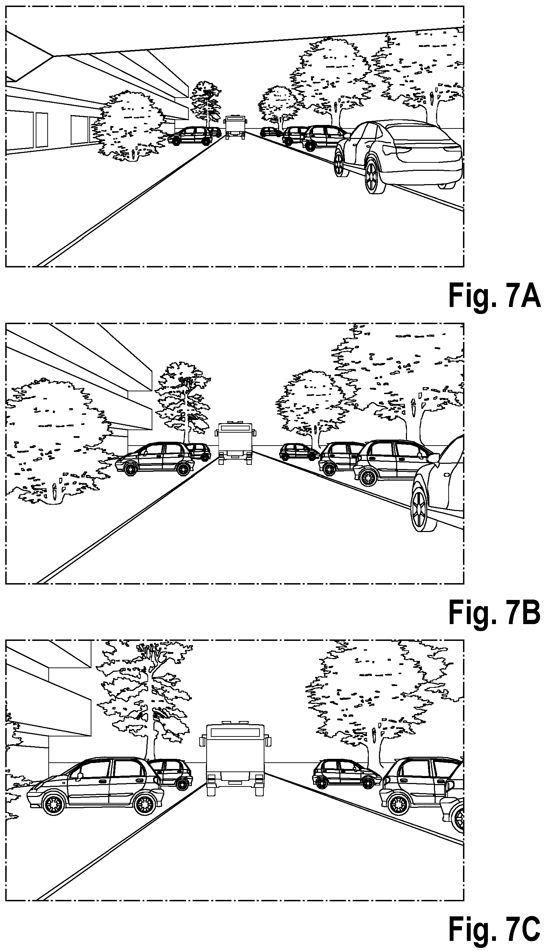

Fig. 7A, 7B, 7C schematically illustrate RGB observations obtained from a dataset, which is obtained by means of 6 cameras and 2 LiDAR sensors in a 5 second sequence.

From the three screenshots, it can be observed that an ego vehicle moves along a road of a traffic scene (e.g., as schematically illustrated in Fig. 6) comprising parked vehicles, buildings as well as trees.

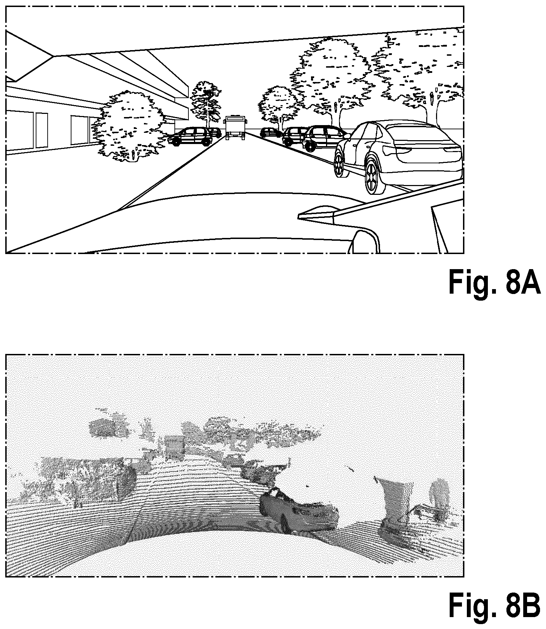

Figs. 8A and 8B show a variant of the scene of Fig. 7A. In Fig. 8A, a hood of the ego vehicle is visible. Fig. 8B shows a screen capture of a 3D visualization, where every point corresponds to a single LiDAR ray. The placement of the points is based on X-Y ray coordinates and estimated depth. The evolved traffic scene of Figs. 7B and 7C may, e.g., be obtained by evolving the Gaussian representation and then performing camera rendering.

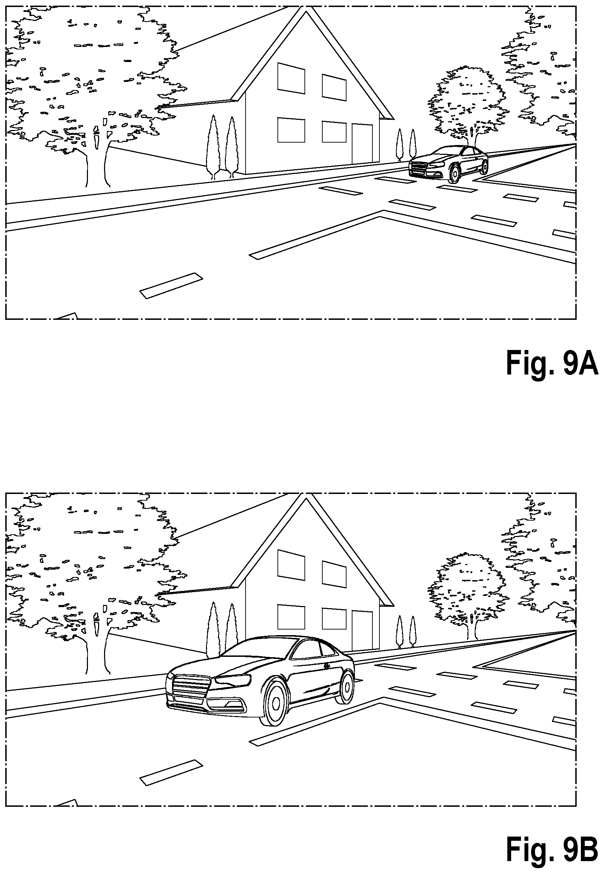

Figs. 9A and 9B show another variant of a modification of a scene. In this example, the optical sensors located in or at an ego vehicle remain stationary relative to a static environment comprising a road layout and houses. An object-centric modelling allows repositioning of objects, such as other traffic participants, within the scene and/or a dynamic reconstruction. E.g., the repositioned object may relate to a different instance in time and/or a dynamic scene.

By the technique, training (and/or testing, and/or validating) sensor datasets can be enriched, sensor simulations for development and/or testing may be performed, and/or editable scenarios (e.g., related to traffic or a manufacturing site) may be provided. Thereby, an early development of new sensors and/or new assemblies of vehicles or robots can be enabled.

Cited Prior Art:
B. Mildenhall, P. P. Srinivasan, M. Tancik, J. T. Barron, R. Ramamoorthi, and R. Ng, "Nerf: Repre- senting scenes as neural radiance fields for view synthesis," in ECCV, 2020.
B. Kerbl, G. Kopanas, T. Leimkühler, and G. Dret- takis, "3d gaussian splatting for real-time radi- ance field rendering," ACM Transactions on Graph- ics, vol. 42, July 2023.
N. Moenne-Loccoz, A. Mirzaei, O. Perel, R. de Lu- tio, J. M. Esturo, G. State, S. Fidler, N. Sharp, and Z. Gojcic, "3d gaussian ray tracing: Fast tracing of particle scenes," 2024.

## Claims

1. Computer-implemented method (100) for generating a joint particle-based representation of a scene from multi-modality sensor data, comprising the method steps of:
Receiving (S102) sensor data acquired by a set of at least two optical sensors of different sensor modality, representing one and the same scene;
Generating (S104), based on the received (S102) sensor data, a joint particle-based representation of the scene covered by the set of at least two optical sensors;
Determining (S105), for a predetermined optical sensor within the set of at least two optical sensors, intersections between rays emanating from a location of the predetermined optical sensor with the generated (S104) joint particle-based representation;
Rendering (S112), using a sensor modality-specific renderer associated with the predetermined optical sensor and based on the determined (S105) intersections between the rays and the joint particle-based representation, an observation of the scene; and
Determining (S114) at least one value of a sensor-specific loss function by comparing the rendered (S112) observation of the scene based on the joint particle-based representation with an observation comprised in the received (S102) sensor data by the predetermined optical sensor;
wherein the joint particle-based representation of the scene is optimized by repeating the steps of determining (S105) the intersections, rendering (S112) the observations and determining (S114) the at least one value of the sensor-specific loss function for every optical sensor within the set of at least two optical sensors, and by optimizing a combination of the determined (S114) at least one value of the sensor-specific loss function for every optical sensor.

2. Method (100) according to claim 1, wherein the at least two optical sensors of different sensor modalities comprises at least two of:
A camera;
A LiDAR sensor; and
A radar sensor.

3. Method (100) according to any of the preceding claims, further comprising the step of:
Receiving (S103), in relation to the predetermined optical sensor, a set of sensor-specific parameters.

4. Method (100) according to any of the preceding claims, wherein the rendering (S112) of the observation is based on a set of values of rendering parameters of the predetermined optical sensor, optionally wherein at least a subset of the rendering parameters corresponds to sensor-specific parameters.

5. Method (100) according to the directly preceding claims, wherein the rendering parameters comprise:
An opacity and/or a color for a camera;
An intensity for a LiDAR sensor; and/or
A radar cross section, RCS, for a radar sensor.

6. Method (100) according to any of the preceding claims, wherein determining (S105) the intersections between the rays and the joint particle-based representation comprises at least one of the steps of:
Generating (S106), for the predetermined optical sensor, one or more rays emanating from the location of the optical sensor;
Determining (S108), for each generated (S106) ray, an intersection with the generated (S104) joint particle-based representation;
Determining (S110), for each determined (S108) intersection, a set of values of rendering parameters based on the generated (S104) joint particle-based representation at the intersection, optionally wherein the set of values of rendering parameters depends on the location of the predetermined optical sensor and/or the sensor modality of the predetermined optical sensor.

7. Method (100) according to any of the preceding claims, wherein the sensor-specific loss function comprises at least one of an L1 loss function, an L2 loss function, a structural similarity index measure, SSIM, and a mean squared error, MSE.

8. Method (100) according to any of the preceding claims, wherein the joint particle-based representation comprises a position of a particle and at least one covariance value.

9. Method (100) according to any of the preceding claims, wherein the joint particle-based representation comprises a three-dimensional, 3D, Gaussian representation of the scene.

10. Computer-implemented method (200) for generating synthetic sensor data sets, comprising the method steps of:
Receiving (S202) an indication of a set of optical sensors, wherein each optical sensor within the set is associated with a sensor modality, and wherein the set comprises at least two optical sensors of different sensor modalities;
Generating (S208), based on the received (S202) indication of the set of optical sensors, a joint particle-based representation for all sensor modalities comprised in the set of optical sensors, wherein the joint particle-based representation represents one and the same scene;
Determining (S209), for each optical sensor within the set of optical sensors, intersections between rays emanating from a location of the optical sensor with the generated (S208) joint particle-based representation; and
Generating (S214), based on the determined (S209) intersections between rays and the joint particle-based representation, a synthetic sensor data set of the scene in relation to each optical sensor within the set.

11. Method (200) according to the directly preceding claim, further comprising at least one of the steps of:
Receiving (S204) an indication of at least one sensor parameter for each optical sensor comprised within the received (S202) indication; and
Receiving (S206) an indication of an object location and/or of at least one property of the scene.

12. Method (200) according to claim 10 or 11, wherein determining (S209) the intersections between rays and the joint particle-based representation comprises at least one of the steps of:
Generating (S210), for each optical sensor within the set of optical sensors, one or more rays emanating from the location of the optical sensor;
Determining (S212), for each generated (S210) ray, an intersection with the generated (S208) joint particle-based representation; and
Determining (S213), for each determined (S212) intersection of a ray with the generated (S208) joint particle-based representation, at least one value of a rendering parameter per optical sensor, wherein the at least one value of the rendering parameter is determined based on the received (S202) indication of the set of optical sensors and optionally on the received (S204) indication of the at least one sensor parameter of the optical sensor.

13. Use of the synthetic data sets, generated by the method (200) of any one of claims 10 to 12, for training a downstream perception task model for performing a perception task based on a set of optical sensors of at least two different sensor modalities, optionally
wherein the perception task comprises at least one of:
An object detection and/or a classification;
An occupancy estimation;
A scene segmentation;
An object tracking;
An object velocity estimation;
A depth estimation and/or distance estimation; and
A temporal prediction.

14. Computing device (300) for generating a joint particle-based representation of a scene from multi-modality sensor data, comprising:
A sensor data reception interface (302), which is configured for receiving sensor data acquired by a set of at least two optical sensors of different sensor modality, representing one and the same scene;
A representation generating unit (304), which is configured for generating, based on the received sensor data, a joint particle-based representation of the scene covered by the set of at least two optical sensors;
A determining unit (305), which is configured for determining, for a predetermined optical sensor within the set of at least two optical sensors, intersections between rays emanating from a location of the predetermined optical sensor with the generated joint particle-based representation;
A set of sensor modality-specific renderers (312), which are configured for rendering, based on the determined intersections between the rays and the joint particle-based representation, of an observation of the scene; and
A loss function (314), which is configured for determining at least one value of a sensor-specific loss function, wherein determining the at least one value of the sensor-specific loss function comprises comparing the rendered observation of the scene with an observation acquired by the predetermined optical sensor;
wherein the joint particle-based representation of the scene is optimized by repeating the steps of determining the intersections, rendering the observation and determining the at least one value of the sensor-specific loss function for every optical sensor within the set of at least two optical sensors, and by optimizing a combination of the determined at least one value of the sensor-specific loss function for every optical sensor.

15. Computing device (400) for generating synthetic sensor data sets, comprising:
A sensor indication reception interface (402), which is configured for receiving an indication of a set of optical sensors, wherein each optical sensor within the set is associated with a sensor modality, and wherein the set comprises at least two optical sensors of different sensor modalities;
A representation generating unit (408), which is configured for generating, based on the received indication of the set of optical sensors, a joint particle-based representation for all sensor modalities comprised in the set of optical sensors, wherein the joint particle-based representation represents one and the same scene;
A determining unit (409), which is configured for determining, for each optical sensor within the set of optical sensors, intersections between rays emanating from the location of the optical sensor with the generated joint particle-based representation; and
A data set generating unit (414), which is configured for generating, based on the determined intersections between rays and the joint particle-based representation, a synthetic sensor data set of the scene in relation to each optical sensor within the set.
